# EUROPEAN PATENT APPLICATION

(11) **EP 4 827 083 A1**
(43) Date of publication of application: **21.10.2026**
(21) Application number: 25171348.3
(22) Date of filing: 17.04.2025
(51) Int. Cl.: H04N 13/239, H04N 13/257, H04N 13/271

(54) **A DEVICE FOR PROVIDING AN ENHANCED IMAGE AND METHOD THEREFOR**

(71) Applicant: Leica Instruments (Singapore) Pte Ltd., Singapore 618299 (SG)
(72) Inventor: THEMELIS, George, 618299 Singapore (SG)
(74) Representative: Paustian & Partner Patentanwälte mbB

(57) **Abstract**

A first aspect of the present disclosure is related to a device for providing an enhanced image, in particular of a medical and/or diagnostic imaging device, configured to:
- obtain a left image and a right image as stereo information of a sample, wherein the left image comprises a first spectral information and the right image comprises a first spectral information ;
- obtain a depth map for the stereo information;
- determine an enhanced image of the sample based on the stereo information and the depth map, by one or both of the following:
-- determine an enhanced left image by determining for the left image a second spectral information based on the first spectral information of the right image and the depth map, in particular wherein the second spectral information is complementary to its first spectral information ;
-- determine an enhanced right image by determining for the right image a second spectral information based on the first spectral information of the left image and the depth map, in particular wherein the second spectral information is complementary to its first spectral information .

## Description

### Technical Field

This disclosure is related to devices for providing an enhanced image, in particular of a medical and/or diagnostic imaging device. Furthermore, methods are disclosed for providing an enhanced image.

### Background

Optical systems of surgical stereo microscopes may employ dual optical paths to provide surgeons with magnified, three-dimensional visualization important for precision tasks. A stereo configuration may consist of paired objective lenses and eyepieces, enabling depth perception during surgical procedures. High-quality optics may ensure excellent resolution, contrast, and brightness. However, current systems face limitations in capturing extensive spectral information due to inherent hardware constraints, impacting their capability for detailed tissue differentiation during surgical or diagnostic tasks. Improvement are desired.

### Summary

An object of the present disclosure is to improve images of vision systems, such as surgical microscopes.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a device for providing an enhanced image, in particular of a medical and/or diagnostic imaging device, *configured to:*
- *obtain a left image and* a *right image* as *stereo information of a sample, wherein the left image comprises a first spectral information and the right image comprises a first spectral information ;*
- *obtain a depth map for the stereo information;*
- *determine an enhanced image of the sample based on the stereo information and the depth map, by one or both of the following:*
   *-- determine an enhanced left image by determining for the left image a second spectral information based on the first spectral information of the right image and the depth map, in particular wherein the second spectral information is complementary to its first spectral information ;*
   *-- determine an enhanced right image by determining for the right image a second spectral information based on the first spectral information of the left image and the depth map, in particular wherein the second spectral information is complementary to its first spectral information .*

A device according to the first aspect may be a control device, e.g. a specially programmed computer, configured to control an imaging device and/or it can be a part of the imaging device. A device may be an imaging device itself configured to observe a sample from two perspectives, in particular in a medical and/or diagnostical context. A device may comprise a stereo camera. A device can be a microscope, an exoscope, etc.

A sample can be any object and/or specimen that can be viewed with an imaging device. **In** a surgical or diagnostical context, a sample can be an organ of a patient and/or a part of an organ. It can be a biopsy, in particular one that is isolated and analyzed in situ. A sample can be or comprise a bone and/or blood of a patient. A sample can also comprise a suture, an incision, or any other artifact placed within or at a being's body for or during a surgical procedure.

Obtaining an information in the sense of this disclosure can comprise receiving and/or a fetching that information.

A left image and a right image that provided stereo information can be obtained from a stereo camera, in particular with a pair of images captured simultaneously by two slightly offset cameras. Additionally or alternatively, a single camera may be used to capture the left and the right image sequentially, moving the camera slightly between shots. Additionally or alternatively, synthetic left and right images may be generated computationally from a single image using depth-information obtained by other means. A left and a right image may be captured from a fixed viewpoint while varying the lighting direction of the sample. Additionally or alternatively, structured light techniques may be used to obtain a left and a right image from a single image of a sample. Additionally or alternatively, a camera paired with a depth sensor (e.g., LiDAR or time-of-flight camera) may combine an image with depth data to obtain stereo-like information on which a left image and a right image can be based on.

A spectral information, such as a first and/or a second spectral information can be based on a pre-defined spectral range. For example, light reflected or emitted from a sample can be captured in a pre-defined spectral range. This can be done by a hardware-based filter and/or by a software-based filter. For each pixel of an image (e.g. of the first image or of the second image) a value representing the captured and potentially filtered light may be provided, e.g. a value based on intensity, reflectance, irradiance, and/or photon counts or any other power-related quantity. For example, pixel intensity may be determined based on a spectral integral (or sum), in particular between an upper and a lower cutoff frequency determined by a filter, of reflectance and/or emission multiplied by the filter sensitivity. Captured light may be visible light, infrared light, and/or ultraviolet light. A spectral information may be based on multispectral imaging, by which specific discrete bands across the electromagnetic spectrum are captured, typically between 3 and 10 bands.

The spectral information captured by the left image and by the right image capture the sample from different perspectives. Based on the different perspectives a 3D-image can be determined.

A depth map may be any kind of depth information which can be related to a stereo information obtained by the device. A depth map may be an image and/or representation where each pixel value encodes a distance (depth) from a camera sensor to a corresponding point in a scene and/or about a sample. A depth map may quantify the spatial structure of the environment captured in an image.

Based on an obtained stereo information and on an obtained depth map, further information is estimated may enhance the captured information and improves the view of a user on a sample. This can be done principally in two ways.

In a first way, an enhanced left image is determined by determining for the left image a second spectral information based on the first spectral information of the right image and the depth map. The second spectral information may be complementary to the first spectral information of the left image. In other words, the spectral information captured or determined about a sample from a right perspective is processed together with the information of the depth map in order to yield a further spectral information for the left image that has not been initially comprised by the left image. For example, the first spectral information of the right image (i.e. from the right perspective) is transformed to the perspective of the left image and can therefore enhance the left image when being added to it.

In a second way, an enhanced right image is determined by determining for the right image a second spectral information based on the first spectral information of the left image and the depth map. The second spectral information may complementary to the first spectral information of the right image. In other words, the spectral information captured or determined about a sample from a left perspective is processed together with the information of the depth map in order to yield a further spectral information for the right image that has not been initially comprised by the right image. For example, the first spectral information of the left image (i.e. from the left perspective) is transformed to the perspective of the right image and can therefore enhance the right image when being added to it.

By integrating an enhanced left image and a right image (or vice versa) and/or by integrating an enhanced left image and an enhanced right image, an enhanced stereo image can be provided in a further embodiment of a device according to the first aspect.

An embodiment of the first aspect is related to a device for providing an enhanced image,
*comprising a stereo camera with:*
   - *a left single view camera with at least one first spectral filter; and*
   - *a right single view camera with at least one second spectral filter;*
*configured to:*
   - *capture the left image with the left single view camera with the first spectral filter; and*/*or*
   - *capture the right image with the right single view camera with the second spectral filter.*

A spectral filter can be a hardware and/or a software filter in particular designed to selectively transmit or block certain wavelengths of light thus capturing images within specific spectral regions. A spectral filter may comprise a bandpass, a shortpass, a longpass, and/or a notch filter. For instance. A bandpass filter may transmit a narrow spectral range, like a near-infrared (NIR) filter around 850 nm. A longpass filter, such as an infrared filter with a cutoff at 720 nm, allow longer wavelengths through while blocking visible light, in particular for infrared light. A shortpass filter may transmit ultraviolet light below 400 nm. A filter may be a multi-filter system, comprising in particular multiple bandpass and/or a multiple notch filters. In case the left and the right image may be captured by different cameras, at least one of the camera may be equipped with a hardware filter.

A filter to capture the first image and or to capture the second image may comprise a Bayer filter, an IR-cut filter, a Hoya filter, a Baader filter and/or a laser line notch filter. A filter applied to capture a left image of a stereo information may differ from a filter applied to capture a right image of a stereo information. Furthermore, a filter may comprise a filter configured to let light in a certain spectral range pass and/or a filter configured to block light in a certain spectral range.

An embodiment of the first aspect is related to a device for providing an enhanced image,
*wherein the first spectral information of the first image and of the second image are related to a pre-defined spectral band , in particular of a plurality of spectral bands of which the left image and the right image comprise information.*

In particular an embodiment may be configured to capture a plurality of spectral bands, e.g. six bands, amongst them bands for visual light (e.g. three bands) and bands to capture fluorescent light (e.g. in one, two, or three bands). Based on the different bands, different left and right images may be generated from the same scene of a sample, for example an natural light image may be generated and a fluorescence light image may be generated.

Multiple bands can be captured with a switching-filter-system and/or with a multi-filter system, such as a Bayer filter. At least one camera of a stereo camera system may be a dedicated multispectral camera, for example where each microfilter in front of the camera corresponds to a specific one of spectral bands. A camera may comprise a Bayer RGB microfilter array or CYGM microfilter array, where a pixel intensity value for each of a set of bands can be calculated from the RGB or CYGM pixel values.

An embodiment of the first aspect is related to a device for providing an enhanced image,
*wherein the first spectral information of the first image and*/*or the first spectral information of the second image is based on RGB information.*

Additionally or alternatively, the first spectral information of the first image and/or the first spectral information of the second image may compose CMYK information and/or of any other color space.

An embodiment of the first aspect is related to a device for providing an enhanced image,
*wherein the first spectral information of the left image and the first spectral information of the right image are connected and complementary.*

The first spectral information of the left image and the first spectral information of the right image may be considered connected and complementary when they capture distinct yet interrelated information about a sample. In particular, the first spectral information of the first and of the second image can be a spectral range of electromagnetic waves. The two spectral ranges may be adjacent or slightly overlapping, thus creating continuous spectral coverage. Furthermore, their complementarity may arise because, together, the two spectral ranges form a broader spectral range, in particular characterizing features of the sample better than each spectral range alone could achieve.

For example, a first spectral information of the left image may be located in the red band and a first spectral information of the right image may be located at near-infrared (NIR) bands. Then according to the first of the two ways described in relation to the first aspect of this disclosure, the left image can be enhanced by transforming the first spectral information of the right image (based on depth information) to the perspective of the left image and by adding the transformed information as second spectral information to the left image to obtain an enhanced left image. This enhanced left image would then comprise the (original) information of the red band and the new information of the NIR band, which was estimated based on the right image. Alternatively or additionally, according to the second of the two ways described in relation to the first aspect of this disclosure, the right image can be enhanced by transforming the first spectral information of the left image (based on depth information) to the perspective of the right image and by adding the transformed information as second spectral information to the right image to obtain an enhanced right image. This enhanced right image would then comprise the (original) information of the (original) NIR band and the new information of the red band, which was estimated based on the left image. Both mutually enhanced images can be integrated into a 3D stereo image for an enhanced 3D view on of sample.

An embodiment of the first aspect is related to a device for providing an enhanced image,
*wherein the first spectral information of the left image or of the right image relates to a first spectral band ; and the other of the two images relates to a part of the first spectral band .*

In this way a matching and the determination of the depth information of the left image and of the right image can be done based on the information captured by both images in the overlapping part of the spectral band. And the information, which is only captured in the image capturing the first spectral band can be transformed based on the depth information to the perspective of the image that captures only the part of the first spectral band. Additionally or alternatively, the part of the spectral band which is captured in high resolution may be transformed to the image which captures the whole spectral band. An additional advantage of this embodiment can be provided if the part of the spectral band that is captured by both images is directed to a spectral range which is important for an analysis of the sample.

An embodiment of the first aspect is related to a device for providing an enhanced image,
*wherein the first spectral information of the left image and the first spectral information of the right image relate to disjunctive spectral bands.*

By capturing disjunctive (i.e. non-connected) spectral band, e.g. each of the two images captures a spectral band not captured by the other image, information of a combined image can be maximized, since no redundant information is captured. One or both of the captured bands can be transformed to the perspective of the respective other image. A determination of depth information may still be possible based on the left and the right image. Additionally or alternatively, another information may be used for determining the depth information. For example, one or more additional images may be taken with redundant spectral information, e.g. overlapping spectral bands or bands that are essentially the same for each image's perspective. Based on this information a depth information can then be determined.

An embodiment of the first aspect is related to a device for providing an enhanced image,
*wherein the first spectral information of the left image and of the right image are at least partly redundant.*

For example, the spectral band captured by the left image overlaps with the spectral band captured by the right image. Based on the information in the overlapping part a depth information may be generated. Because structures within the overlapping part of the band are captured by both images and can therefore be used to match the left and the right image in order to determine a depth information.

An embodiment of the first aspect is related to a device for providing an enhanced image,
*wherein the depth map comprises a disparity map based on the left image and on the right image.*

A disparity map may be a two-dimensional representation indicating, e.g. for each pixel in a stereo image, the difference in positions between the left and right views. Each pixel's intensity/value corresponds to a disparity, allowing recovery of relative depths and enabling three-dimensional understanding of a scene from the two-dimensional left and right images. Based on a disparity (map), pixels for any perspective on the baseline (i.e. a straight line between the left and the right image) can be determined. A disparity map can be determined by mapping the left image of a stereo camera to a right image and/or another disparity map can be determined by mapping the right image to the left image. Disparity maps can be created for stereo images. Since, the stereo cameras may be aligned vertically, the correspondence problem, i.e. to find corresponding sample pixel of the image of the left camera in the right camera image, can be solved line by line.

A disparity map may be determined by the device according to the first aspect of this disclosure, e.g. based on the information of a stereo camera.

An embodiment of the first aspect is related to a device for providing an enhanced image,
*wherein the depth map is determined based on the first spectral information of the left image and on the first spectral information of the right image .*

This may in particular be a good solution if the first spectral information of the left image and the first spectral information of the right image are redundant, e.g. relate to overlapping spectra. Additionally or alternatively, this solution may be good in case the left image and the right image comprise structures that are visible in both images. This may facilitate a matching of the images and thus a determination of the depth map.

An embodiment of the first aspect is related to a device for providing an enhanced image,
*wherein the depth map is determined based on spectral information not comprised in the first spectral information of the left image and*/*or in the first spectral information of the right image .*

In this case, depth information may come from an additional image and/or an additional sensor. Additionally or alternatively, the first and the second image (or further left and right images of the same scene) may capture one or more additional bands, in particular which is at least partly the same for both images. Based on this information a matching can then be performed. Additionally or alternatively, a third image may be captured from the left perspective or from the right perspective that captures information which is also comprised in the right image or the left image respectively. Based on the common information, a matching may then be performed, and a depth map may be generated.

An embodiment of the first aspect is related to a device for providing an enhanced image,
*configured to:*
- *for a part of the left image or of the right image in which no enhanced image information can be determined, use information of the respective other image.*

In this case the user can be presented with a complete 3D-image, although in certain parts of the enhanced image lacks 3D information.

An embodiment of the first aspect is related to a device for providing an enhanced image,
*configured to:*
- *for a part of the left image and*/*or of the right image in which no enhanced image information is determined, use information of one or more other bands of a plurality of spectral bands .*

The added information would then relate to a different spectral band, e.g. captured by a further image of the scene, however at least the determined enhanced image would have no undefined parts.

An embodiment of the first aspect is related to a device for providing an enhanced image,
*configured to:*
- *label a part of the left image and*/*or of the right image in which no enhanced image information is determined.*

A label can be represented by coloring and/or encircling the undefined part(s) of an enhanced image. Additionally or alternatively, a label may comprise a tag with respective language informing the user that a certain part of the enhanced image is undefined. This can also be applied if the undefined part is filled with information from the other image and/or from different spectral bands, as described above.

A second aspect of the present disclosure is related to a method for providing an enhanced image,
*comprising:*
- *obtaining a left image and* a *right image* as *stereo information of a sample, wherein the left image comprises a first spectral information and the right image comprises a first spectral information* ;
- *obtaining a depth map for the stereo information;*
- *determining an enhanced stereo image of the sample based on the stereo information and the depth map, by one or both of the following:*
   - *determining an enhanced left image by determining for the left image a second spectral information based on the first spectral information of the right image and the depth map, in particular wherein the second spectral information is complementary to its first spectral information ;*
   - *determining an enhanced right image by determining for the right image a second spectral information based on the first spectral information of the left image and the depth map, in particular wherein the second spectral information is complementary to its first spectral information .*

A method according to the second aspect can comprise one or more steps to execute one or more functions of a device according to the first aspect of this disclosure. Steps of a method according to the second aspect of this disclosure can be configured such that thy comprise features of a device according to the first aspect of this disclosure.

A further aspect of the present disclosure is related to a computing device comprising a processor configured to carry out the method according to any one of preceding aspects/embodiments.

A further process of the present disclosure is related to a computer program product comprising instructions which, when the program is executed by a computer system, cause the computer system to carry out the method according to any one of the preceding aspects/embodiments.

A further aspect of the present disclosure is related to a computer-readable medium comprising instructions which, when executed by a computer system, cause the computer system to carry out the method according to any one of the preceding aspects/embodiments.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates an image enhancement according to an embodiment of this disclosure.
Fig. 2a illustrates an image enhancement according to an embodiment of this disclosure.
Fig. 2b further illustrates the image enhancement described in relation to Fig. 2a.
Fig. 3 illustrates a microscope system according to or for embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

**In** general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

**In** the following description reference is made to the accompanying figures which form part of the disclosure and which illustrate specific aspects in which the present disclosure can be understood. Identical reference signs refer to identical or at least functionally or structurally similar features.

### Detailed description

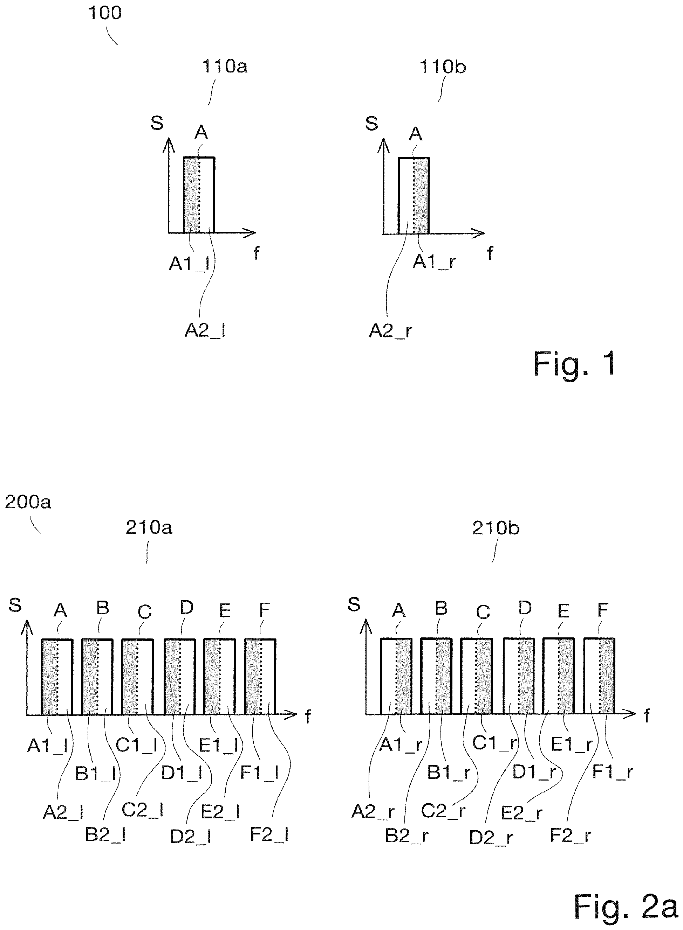

Fig. 1 illustrates an image enhancement 100 in the spectral domain of a device according to an embodiment of this disclosure. On the left hand side spectral information 110a related to a left image is shown. On the right hand side spectral information 110b related to a right image is shown. The spectral information is depicted in intensity "S" over the frequency "f". The left image can be obtained by a first camera, e.g. a camera of a surgical microscope. The right image can also be obtained by a camera of the microscope (e.g. from a stereo camera), but can also be obtained from a different camera. The left image and the right image are directed to the same scene, but from a different perspective. Hence stereo information can be derived based on the left and the right image. And based on the stereo information a depth information, e.g. a disparity map can be derived. A disparity map may be a grayscale image that shows the difference in position (called disparity) of corresponding pixels between the left and the right image. Based on depth information, a transformation of the perspective of the left image to the perspective of the right image can be performed and vice versa.

The left image comprises a first spectral information A1_l. The right image comprises a first spectral information A1_r. The first spectral information of the left image A1_l is transformed to the perspective of the right image based on the depth information. This yields the information A2_r of the right image. By integrating the estimated information A2_r into the right image an enhanced right image is derived. Instead of comprising only the first spectral information A1_r, the enhanced right image comprises the spectral information A. Analogously, the left image can be enhanced by estimating the spectral information A2_l based on the depth information and the information A1_r comprised in the right image. In particular in case the left and the right image are captured by a stereo camera, a integration of the enhanced left image and the enhanced right image provide an enhanced 3D stereo image of the captured scene.

For some parts of a scene, it may be not possible to perform a transformation of spectral information of the left image to the right image or vice versa. This may be in particular the case if the left image and the right image do not capture the complete information of the respective other image. In this case no mapping of information from the left image to the right image may be performed. In this case, the left image can just be provided with an untransformed copy of right image part information, or vice versa. Additionally or alternatively, the respective image part can be marked and/or labelled to inform a user that this part does not comprise 3D information. In a simple alternative, the respective part can just be colored black.

Fig. 2a illustrates an image enhancement 200a in the spectral domain according to an embodiment of this disclosure. Similar to the preceding figured, on the left hand side spectral information 210a related to left images is shown and on the right hand side spectral information 210b related to right images is shown. The spectral information is again in depicted in intensity "S" over the frequency "f". And the scales are again the same for both graphs. In difference to the preceding figure, a plurality of six different spectra A - F is comprised in each of the left and the right images. Each of the left images comprise information in one of the spectra A1_l - F1_l (grey parts of the spectra). Each of the right images comprises information in one of the spectra A1_r - F1_r (grey parts of the spectra). The spectral information comprised in the captured left images is different from the spectral information comprised in the captured right images. As for the device described in the preceding figure, depth information (e.g. a disparity map) can be determined based on the left and the right images, because the images capture the same scene (from a sample), but from different perspectives. Additionally or alternatively, the depth information may be provided by an additional depth sensor and/or based on images from other perspectives. One or more left images, in particular all left images taken with different spectral information, can be integrated to a multispectral left image.

The left and the right images may be captured by a multispectral imaging system. The multispectral imaging system may comprise two multi-spectral imaging sensors that are configured to capture different spectral bands each. The two multispectral imaging sensors can be integrated, e.g., into a 3D stereo camera, wherein the left camera comprises a first multispectral imaging sensor and the right camera comprises a second multispectral imaging sensor. The imaging sensors are configured and/or designed to capture only selected spectral parts. For example, the imaging sensor for the left images captures only the parts A1_l - F1_l (indicated in grey) of the spectral bands A - F. Additionally or alternatively, the imaging sensor for the right images captures only the parts A1_r - F1_r (indicated in grey) of the spectral bands A - F. Information in the corresponding bands A - F differs in the perspective (left image, right image) in which it is captured.

Each multispectral imaging system can be configured, e.g., as a switching sensor system. A switching sensor system may be configured with multiple filters to capture images within one or more different spectral bands each. With a switching sensor system, e.g., an image of each spectral band A1_l - F1_l, for one or more left images and an image of each band A1_r - F1_r for one or more right image can be captured. A multispectral imaging system may comprise multispectral filters, such as a Bayer filter, to capture a single images with a plurality of different pre-defined spectral bands.

Based on the captured different spectral information, left images A2_l - F2_l can be enhanced by using information from captured right images, and/or right images A2_r - F2_r can be enhanced by using information from captured left images. This is explained in more detail in relation to the next figure.

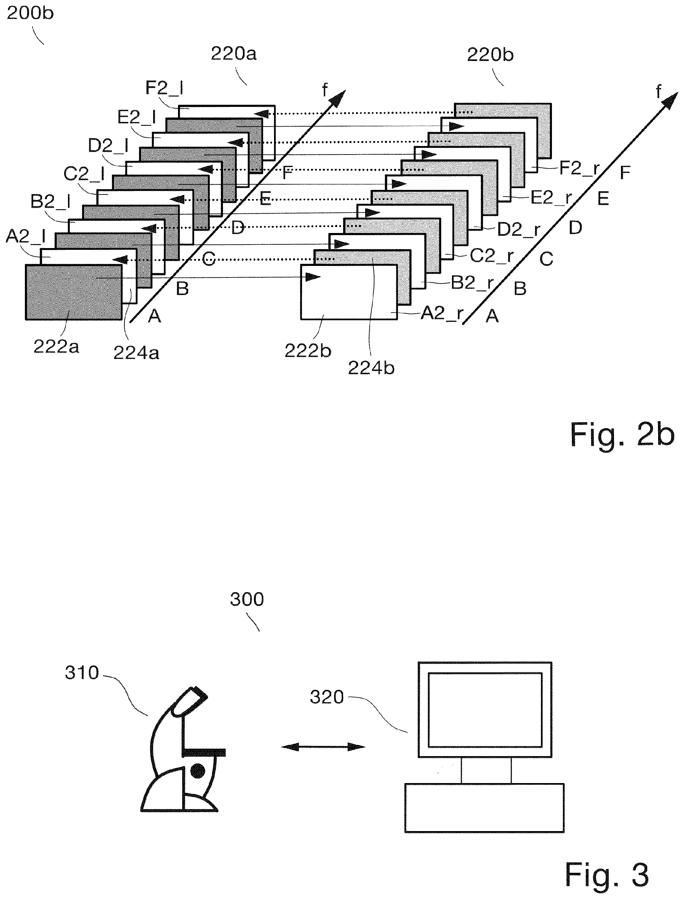

Fig. 2b further illustrates the image enhancement 200b described in relation to the preceding figure. The figures shows image stack, i.e. a plurality of images, captured at different spectral bands for the left channel 220a and for the right channel 220b. The spectral sensitivity of each imaging channel (i.e. the multispectral imaging sensor with corresponding filter(s) for left and right images) is adjusted so that each channel captures different subsets of spectral bands. The left channel is configured to captures the left halves of spectral bands A - F (denoted as A1_l, B1_l, C1_l, D1_l, E1_l, F1_l in the preceding figure). The right channel is configured to capture the right halves of the same spectral bands A - F (denoted as A1_r, B1_r, C1_r, D1_r, E1_r, F1_r in the preceding figure).

As described already above, this spectral selectivity may be achieved by using optical filters such as multiple-bandpass and/or multiple-notch filters placed in the optical paths of each of the channels. The filters can be mounted on mechanisms that allow for easy and fast switching, e.g. between native and enhanced multispectral resolutions.

The selective capture leaves some spectral information uncaptured in each channel. This information can be estimated/reconstructed based on the information of the respective other channel. In the illustrated embodiment the information of the six spectral bands A1_l, B1_l, C1_l, D1_l, E1_l, F1_l are captured by a plurality of left images (indicated in dark grey) being part of the left image stack 210a. And information of six spectral bands A1_r, B1_r, C1_r, D1_r, E1_r, F1_r are captured by a plurality of left images (indicated in light grey) being part of the right image stack 210b. The captured bands are different for the left images and for the right images (as illustrated in the preceding figure). Based on each of the captured bands, information is estimated from one of the two perspectives (left, right) for the respective other perspective (non-captured, estimated images are captured in white). For example, based on the left image 222a, in which spectral information of subband A1_l is captured from a left perspective, spectral information A2_r for the right image 222b is estimated. The information of the right image 222b has not been captured from the right perspective due to the selective capture. The estimation of the right image 222b is achieved by transforming the information of the captured left image 222a based on depth information to the perspective of the right images. As explained previously, depth information can be provided by different methods, e.g. based on a disparity map generated based on an left-right image pair.

This transformation-method can be performed to obtain not only the image 222b but also one or more other images (indicated in white). For example, the captured right image 224b in the spectral band A1_r can be transformed to estimate the non-captured left image 224a. The final result can in particular be a complete spectral cube for both left and right channels, increasing the spectral resolution beyond what was originally captured.

In other words, by using the depth information, e.g. a disparity map, images from one channel are projected onto the perspective of the other channel to reconstruct missing spectral bands. The missing spectral information of the left channel, i.e. the information in missing bands A2_l, B2_l, C2_l, D2_l, E2_l, F2_l are determined using the depth information and spectral information A1_r, B1_r, C1_r, D1_r, E1_r, F1_r of captured images of the right channel (indicated by the arrows from right to left). The missing right image information, i.e. the information in missing bands A2_r, B2_r, C2_r, D2_r, E2_r, F2_r are determined using the depth information and corresponding spectral information A1_l, B1_l, C1_l, D1_l, E1_l, F1_l of captured images from the left channel (indicated by the arrows from left to right).

Depth Map Calculation can be performed, e.g., by using common spectral bands that exist between the channels. In particular they can be used directly to calculate disparity and generate a depth map. Additionally or alternatively, pairing similar and/or adjacent spectral bands that reflect comparable tissue features may be paired for depth/disparity calculation. Additionally or alternatively, multiple spectral bands from each channel are combined to create a "pseudo-panchromatic" or a "composite-artificial" image that are sufficiently similar for depth/disparity determinations.

Further features of one or more embodiments that can be added independently may be comprised in the following:
Handling Artifacts and Missing Data
   - Occlusions and blind spots: Uneven tissue surfaces may cause certain areas to be visible in only one channel, leading to gaps in reconstructed images.
   - Mitigation strategies:
      - Ignoring pixels: Displaying missing pixels in a distinct color (e.g., black) to indicate incomplete data.
      - Labeling missing data: Marking these pixels as missing spectral points in the spectral data cube, allowing users to interpret the data accordingly.
   - Advanced techniques:
      - Interpolation methods: Applying advanced interpolation or inpainting techniques to estimate missing data where appropriate.
Implementation details
   - Optical filters: Multiple-bandpass or multiple-notch filters modify the spectral sensitivity and can be adjusted and/or replaced depending on the required spectral bands.
   - Computational processing: Image processing algorithms and stereo vision techniques are used for depth map calculation and/or image reconstruction.
   - Dynamic adjustment:
      - Tunable filters: Utilizing tunable filters allows dynamic adjustment of spectral sensitivities during operation.
Advantages
   - Enhanced spectral resolution: Increases the effective spectral resolution without significant hardware additions.
   - Maintained stereoscopic visualization: Essential for surgical precision, the stereoscopic view is preserved.
   - Cost-effective: Leverages existing hardware, reducing the need for expensive and complex components.
Alternative Designs
   - Variable spectral band allocation: The number and selection of spectral bands assigned to each channel can be adjusted based on specific application needs.
   - Dynamic spectral sensitivity:
      - Different filter types: Implementing various types of filters, including tunable filters, for dynamic spectral adjustments.
   - Algorithm adaptation: Reconstruction algorithms can be tailored to the characteristics of the spectral bands and/or specific imaging conditions.
Connections to Larger Systems
   - Integration with existing microscopes: The method can be integrated into current surgical microscopes as an upgrade, enhancing their spectral imaging capabilities.
   - Image-guided surgery systems: Improved spectral imaging aids in tissue identification and/or diagnosis, benefiting image-guided surgical procedures.
Customer Workflow
   - Enhanced surgical imaging: Surgeons receive higher-resolution spectral information without sacrificing the depth perception provided by stereoscopic visualization.
   - Real-time processing: The system supports real-time imaging, essential for dynamic surgical environments.

Some embodiments relate to a microscope comprising a system as described in connection with one or more of the Figs. 1 to 2b. Alternatively, a microscope may be part of or connected to a system as described in connection with one or more of the Figs. 1 to 2b. Fig. 3 shows a schematic illustration of a system 300 configured to perform a method described herein. The system 300 comprises a microscope 310 and a computer system 320. The microscope 310 is configured to take images and is connected to the computer system 320. The computer system 320 is configured to execute at least a part of a method described herein. The computer system 320 may be configured to execute a machine learning algorithm. The computer system 320 and microscope 310 may be separate entities but can also be integrated together in one common housing. The computer system 320 may be part of a central processing system of the microscope 310 and/or the computer system 320 may be part of a subcomponent of the microscope 310, such as a sensor, an actor, a camera or an illumination unit, etc. of the microscope 310.

The computer system 320 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 320 may comprise any circuit or combination of circuits. In one embodiment, the computer system 320 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 320 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 320 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 320 may also include a display device, one or more speakers, and a keyboard and/or controller, which can include a mouse, trackball, touch screen, voice-recognition device, or any other device that permits a system user to input information into and receive information from the computer system 320.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: image enhancement
- 110a: left channel spectral information
- 110b: right channel spectral information
- 200a: image enhancement
- 200b: estimation of missing information in image stacks
- 210a: left channel spectral information
- 210b: right channel spectral information
- 220a: image stack of left channel
- 220b: image stack of right channel
- 222a: captured left image
- 222b: estimated right image
- 224a: estimated left image
- 224b: captured right image
- 300: microscope system
- 310: microscope
- 320: computer

## Claims

1. A device (100) for providing an enhanced view of an image, in particular of a medical and/or diagnostic imaging device,
configured to:
- obtain a left image (110a) and a right image (110b) as stereo information of a sample, wherein the left image comprises a first spectral information (A1_l) and the right image comprises a first spectral information (A1_r);
- obtain a depth map for the stereo information;
- determine an enhanced image of the sample based on the stereo information and the depth map, by one or both of the following:
-- determine an enhanced left image by determining for the left image a second spectral information (A2_l) based on the first spectral information of the right image (A1_r) and the depth map, in particular wherein the second spectral information is complementary to its first spectral information (A1_l);
-- determine an enhanced right image by determining for the right image a second spectral information (A2_r) based on the first spectral information of the left image (A1_l) and the depth map, in particular wherein the second spectral information is complementary to its first spectral information (A1_r) .

2. The device according to the preceding claim,
comprising a stereo camera with:
- a left single view camera with at least one first spectral filter; and
- a right single view camera with at least one second spectral filter;
configured to:
- capture the left image (110a) with the left single view camera with the first spectral filter; and/or
- capture the right image (110b) with the right single view camera with the second spectral filter.

3. The device according to one of the preceding claims,
wherein the first spectral information of the first image and of the second image (A1_l, A1_r) are related to a pre-defined spectral band (A), in particular of a plurality of spectral bands (A - F) of which the left image (110a) and the right image (110b) comprise information.

4. The device according to one of the preceding claims,
wherein the first spectral information of the first image and/or the first spectral information of the second image is based on RGB information.

5. The device according to one of the preceding claims,
wherein the first spectral information (A1_l) of the left image (110a) and the first spectral information (A1_r) of the right image (110b) are connected and complementary.

6. The device according to one of the preceding claims,
wherein the first spectral information of the left image (110a) or of the right image (110b) relates to a first spectral band (A); and the other of the two images relates to a part of the first spectral band (A).

7. The device according to one of the preceding claims,
wherein the first spectral information of the left image and the first spectral information of the right image (A1_l, A1_r) relate to disjunctive spectral bands.

8. The device according to one of the preceding claims,
wherein the first spectral information of the left image (110a) and of the right image (110b) are at least partly redundant.

9. The device according to one of the preceding claims,
wherein the depth map comprises a disparity map based on the left image and on the right image.

10. The device according to one of the preceding claims,
wherein the depth map is determined based on the first spectral information (A1_l) of the left image (110a) and on the first spectral information (A1_r) of the right image (110b).

11. The device according to one of the preceding claims,
wherein the depth map is determined based on spectral information not comprised in the first spectral information (A1_I) of the left image (110a) and/or in the first spectral information (A1_r) of the right image (110b).

12. The device according to one of the preceding claims,
configured to:
- for a part of the left image (110a) or of the right image (110b) in which no enhanced image information can be determined, use information of the respective other image.

13. The device according to one of the preceding claims,
configured to:
- for a part of the left image and/or of the right image in which no enhanced image information is determined, use information of one or more other bands of a plurality of spectral bands (A - F).

14. The device according to one of the preceding claims,
configured to:
- label a part of the left image (110a) and/or of the right image (110b) in which no enhanced image information is determined.

15. A method for providing an enhanced view of an image,
comprising:
- obtaining a left image (110a) and a right image (110b) as stereo information of a sample, wherein the left image comprises a first spectral information (A1_l) and the right image comprises a first spectral information (A1_r);
- obtaining a depth map for the stereo information;
- determining an enhanced stereo image of the sample based on the stereo information and the depth map, by one or both of the following:
- determining an enhanced left image by determining for the left image a second spectral information (A2_l) based on the first spectral information of the right image (A1_r) and the depth map, in particular wherein the second spectral information is complementary to its first spectral information (A1_l);
- determining an enhanced right image by determining for the right image a second spectral information (A2_r) based on the first spectral information of the left image (A1_l) and the depth map, in particular wherein the second spectral information is complementary to its first spectral information (A1_r) .
